(19) Europäisches Patentamt

European Patent Office

Office européen des brevets

(11) **EP 3 016 346 A1**

(12) **EUROPEAN PATENT APPLICATION**

(43) Date of publication:
**04.05.2016 Bulletin 2016/18**

(51) Int Cl.:
**H04L 29/06** (2006.01)

(21) Application number: **14306732.0**

(22) Date of filing: **29.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Le Scouarnec, Nicolas**
**35576 Cesson-Sévigné (FR)**

• **Heen, Olivier**
**35576 Cesson-Sévigné (FR)**
• **Neumann, Christoph**
**35576 Cesson-Sévigné (FR)**
• **Onno, Stéphane**
**35576 Cesson-Sévigné (FR)**

(74) Representative: **Huchet, Anne**
**Technicolor**
**1-5 rue Jeanne d'Arc**
**92130 Issy-Les-Moulineaux (FR)**

(54) **Data access method, devices and computer programs**

(57)     The invention relates to a server and a method for accessing a data. The method is implemented in a server accessible by a client through a communication network. The method comprises:
- receiving (100), at a given time (to), from said client, a request (req) to access said data using a first location;
- transmitting (120) to said client a response (rep) comprising said data;

wherein said data is obtained by a mapping (110) of the first location to a data, said mapping being determined in function of said given time (to) and in function of an information representing a validity period for said mapping, the validity period specifying a time period during which the mapping for accessing to the data is valid.

Fig. 1

## Description

### 1. Technical field

The disclosure relates to the transmission of data to a client in a client-server system. More specifically, the disclosure pertains to a data access method that makes it harder to retro engineer the system architecture implemented on server side to deliver said data to the client, when observing the traffic running between the client and the system. The present disclosure can be applied notably but not exclusively to the fields of web services, web applications and distributed system.

### 2. Background Art

A stateless client-server system is a system in which the server has no internal state related to the connection with a particular client. This implies that all data needed by the server for the computation is carried at each communication between the client and the server. Such stateless conception of systems reduces the memory footprint at the server side, simplifies the handling of failures since there is no need to garbage collect information related to failed connections, makes easier to build scalable system, simplifies load balancing and fallback procedures. Indeed, in such a system, servers facing clients are interchangeable since they have no internal state but receive all information needed for their computation piggybacked to the request. Thus this is often a preferred way of building modern distributed systems.

Most applications are evolving towards a cloud-based model (SaaS for software as a service): they tend to be relatively passive web applications facing users with a lot of computations operating within the cloud. The web applications communicate with their servers with HTTP/HTTPS/SPDY protocols. Cloud-based systems (more generally Web-based systems) have the advantages that logic at client is reduced, thus allowing the user to use any device, but also reducing possible issues at the client. As a side effect, the functions of the software are better protected from piracy/counterfeiting.

Scalable/stateless applications will isolate functions across servers so as to ease scaling, and mitigate security issues. If a server is compromised, this limits the impact to the functions it is in charge of, and the data it can access. If a server is overloaded, it is easy to determine which component of the system is heavily loaded so as to start an additional server with this component. Furthermore, this also allows choosing servers tailored for the component it runs (high CPU capacities for processing intensive components, high network throughput for components communicating a lot through the network, high storage capacities for components that deal with massive amounts of data). Finally, it allows minimizing the number of servers that must maintain a state.

Separating functional modules and adopting a stateless design, while desirable when designing the system for the numerous aforementioned reasons make it easier to retro-engineer the system, thus identifying the state and its representation when it is passed from servers to client and from client back to servers. It also makes it easier to identify the different functional modules of the system as they run on different servers.

Therefore, by using simple and affordable tools, such as web debugging tools running on client side (Fiddler® for example), anyone can easily capture and browse the traffic running on a computer network, and is likely to learn a lot about the system architecture implemented on server side to deliver a requested content to a client.

The motivations for such retro engineering are many. For example, it could be used to analyse and copy the design of the system. It could also serve as a way to alter the behaviour of clients, for example by identifying advertisement servers so as to implement ad blockers without impacting the rest of the application. Considering the field of computer security issues, it could also be a first step for finding potential vulnerabilities to attack the system.

Thus, there is currently a need for a method for accessing data, prior to its transmission to a client through a communication network that makes it harder to retro engineer the system implemented on server side.

### 3. Summary

The disclosure, in at least one embodiment, is aimed especially at overcoming these different drawbacks of the prior art.

Additionally, an object of at least one embodiment of the disclosure is to propose a data access method from an obfuscated location of data previously provided to the client. The disclosure relates to a method for accessing a data, said method being implemented in a server accessible by a client through a communication network, said method comprises:

- receiving, at a given time, from said client, a request to access said data using a first location;
- transmitting to said client a response comprising said data;

wherein said data is obtained by a mapping of the first location to a data, said mapping being determined in function of said given time and in function of a piece of information representing a validity period for said mapping, the validity period specifying a time period during which the mapping for accessing to the data is valid.

Thus, whereas the real location of a data may stay the same on server side, the information delivered to a client and representing the location of this data (referred here to as "the first location") changes depending on when the client sends its request to access said data. The retro engineering of the system is thus complicated, since the characteristics of the system that were potentially inferred from the constancy of location information embedded in traffic passed from servers to client and from client back to servers are no longer readily accessible, thanks to the fluctuation now introduced in the location information (the first location changes periodically and may then be considered as an obfuscated location) and the use of an appropriate mapping on server side to obtain the expected data.

According to an embodiment, determining said mapping of the first location to a data comprises looking up in a data structure.

Thus, the mapping in use can be selected among a set of valid mappings previously generated and stored in a data structure.

According to an embodiment, determining said mapping of the first location to a data comprises:

- identifying, within said location data structure, a set of valid mappings, a valid mapping corresponding to mapping for which a validity period is valid considering said given time ($t_0$);
- selecting at least one mapping among said set of valid mappings.

Thus, at a given time, more than one valid mapping may exist in the data structure, associating a location to a data. Thus, the responses transmitted to some clients simultaneously (or nearly simultaneously) requesting access to this same data will not necessary contain the same information representing the location of said data.

Therefore, this makes it even harder for a potential attacker or someone who wishes to learn more about the system architecture to perform retro engineering.

According to an embodiment, said mapping of the first location to a data comprises applying a pseudorandom permutation to translate said first location into a second location of the data.

Thus, the clear location of some data can be obtained by applying a pseudo-random permutation on some obfuscated location of the data. By using a pseudorandom permutation, which is reversible, it is possible to retroactively retrieve which obfuscated location was associated to the clear location of a data at a given time. Thus, for debugging or troubleshooting purpose, it remains possible for a programmer knowing the appropriate key to decipher URLs or messages to infer what their clear destination was.

Thus, by using a pseudorandom permutation, there is no need to store the mapping obtained in a data structure, since it may be computed on the fly at any time.

According to an embodiment, said first location comprises a value and a piece of information representative of the mapping to be used to access data using said value.

Thus, even if more than one mapping is valid at a same time, the mapping to be used can be determined thanks to a piece of information embedded in the received request.

According to an embodiment, mapping of said first location to a data is used when:

$$t_0 > T_{beg} + thd_1$$

where :

$t_0$ is said given time;
$T_{beg}$ is representative of the beginning of validity period for said mapping.
$thd_1$ is representative of a propagation threshold.

Thus, it is possible thanks to the propagation threshold ($thd_1$) to ensure that all the servers potentially involved in the system have had enough time to synchronize with each other and have all taken into account a new mapping of a location to a data when this mapping is used.

According to an embodiment, mapping (110) of said first location to a data is used when:

$$t_0 < T_{end} - thd_2$$

where :

$t_0$ is said given time;
$T_{end}$ is representative of the end of validity period for said mapping;
$thd_2$ is representative of a processing threshold.

Thus, it is possible thanks to the processing threshold ($thd_2$) to ensure that a given mapping will stay valid long enough to give a client enough time to use the first location to access the associated data (even if the data rate for client-server exchange is low, or if data size is important).

According to an embodiment, said first location belongs to the group comprises:

- IP addresses;
- Subdomain names;
- Directory names;
- Keys in key-value store.

Thus, it is possible to programmatically modify a location data, for example by updating domain names in a DNS server or by rotating available IP addresses.

In another embodiment, the disclosure relates to a server for accessing a data, said server being accessible by a client through a communication network. According to the disclosure, said server comprises:

- means for receiving, at a given time ($t_0$), from said

client, a request (req) to access said data using a first location;
- means for transmitting to said client a response (rep) comprising said data.

wherein said data is obtained by a mapping of the first location to a data, said mapping being determined in function of said given time ($t_0$) and in function of a piece of information representing a validity period for said mapping, the validity period specifying a time period during which the mapping for accessing to the data is valid.

According to an embodiment, said server further comprises means for looking up in a data structure to determine a mapping to use to access said data from said first location.

According to an embodiment, said server comprises:

- means for identifying, within said data structure, a set of valid mappings, a valid mapping corresponding to a mapping for which a validity period is valid considering said given time ($t_0$);
- means for selecting at least one mapping among said set of valid mappings.

According to an embodiment, said server comprises means for applying a pseudorandom permutation to translate said first location into a second location of the data.

According to an embodiment, said server comprises means for using a mapping of said first location to said data when:

$$t_0 > T_{beg} + thd_1$$

where :

$t_0$ is said given time;
$T_{beg}$ is representative of the beginning of validity period for said mapping.
$thd_1$ is representative of a propagation threshold.

According to an embodiment, said server comprises means for using a mapping of said first location to said data when:

$$t_0 < T_{end} - thd_2$$

where :

$t_0$ is said given time;
$T_{end}$ is representative of the end of validity period for said mapping;
$thd_2$ is representative of a processing threshold.

In an embodiment, the various steps of the methods according to the present principles are implemented by one or more software or computer programs comprising software instructions for execution by a data processor or a module, and adapted for controlling the execution of the different process steps.

Accordingly, the present principles also provides a program which can be executed by a computer or a data processor, the program including instructions for controlling the execution of the steps of a method as mentioned above.

This program can use any programming language, and be in the form of source code, object code or intermediate code between source code and object code, such as a partially compiled form, or in any other desirable form.

The present principles also provide a medium readable by a data processor, and containing instructions of a program as mentioned above.

The information carrier may be any entity or device capable of storing the program. For example, the medium may comprise a storage medium, such as a ROM, for example a CD ROM or a microelectronic circuit, or a magnetic recording medium, such as a diskette (floppy disk) or a hard drive.

On the other hand, the information carrier may be a transmissible carrier such as an electrical or optical signal which may be conveyed via electrical or optical cable, by radio or by other means. The program according to the present principles may in particular be downloaded over a network such as the Internet.

Alternatively, the information carrier may be an integrated circuit in which the program is incorporated, the circuit being adapted to perform or to be used in carrying out the process in question.

According to one embodiment, the present principles are implemented using software and / or hardware. In this context, the term "module" can correspond in this document as well as a software component to a hardware component or a set of hardware and software components.

A software component is one or more computer programs, one or more sub-programs of a program, or more generally to any element of a program or software capable to implement a function or set of functions, according to what is described below for the module. Such software component is executed by a processor of a physical entity (TV, projector, terminal, server, gateway, router, etc.) and is likely to access the hardware resources of the physical entity (memory, storage media, bus communication, e-cards I/O, user interfaces, etc.).

Similarly, a hardware component is any component of a hardware (or hardware) that can implement a function or set of functions, according to what is described below for the module. It may be a component integrated with programmable hardware or software for the execution processor, for example an integrated circuit, a smart card, a memory card, an electronic card for the execution of a firmware, etc.

Each component of the system described above provides its own software modules. The various embodiments described above can be combined together for the implementation according to the present principles.

## 4. Brief Description of Drawings

Other features and advantages of embodiments of the disclosure shall appear from the following description, given by way of indicative and non-exhaustive examples and from the appended drawings, of which:

- Figure 1 illustrates the main features of a first aspect of the disclosure, related to a data access method;
- Figure 2 illustrates a variant of the first aspect of the disclosure, which involves the use of a data structure;
- Figure 3 illustrates an embodiment according to the first aspect of the disclosure;
- Figure 4 illustrates another embodiment according to the first aspect of the disclosure;
- Figure 5 illustrates an embodiment of a data access server according to the disclosure;
- Figure 6 illustrates the main features of a second aspect of the disclosure, related to a method for registering a mapping in a data structure;
- Figure 7 illustrates an embodiment of a registering server according to the disclosure.

## 5. Description of Embodiments

### 5.1 Context of the disclosure

A technique for accessing data before transmitting it to a client through a communication network is described hereunder.

The term "data" must be understood here in a broad sense. It includes but is not limited to text files, still images, animation, audio/video clips, games, songs, and any other multimedia content or combination of different content forms distributable in digital format (including html pages). It includes also any piece of data that is not considered as a multimedia content strictly speaking, but that is still distributable in digital format, such as Internet Protocol addresses (also referred to as IP addresses), hostnames, or other digital information representative of a location for example. Data may comprise, according to the disclosure, digital contents and/or resources for accessing or obtaining these contents.

A data may comprise or may be associated with some resources. In the context of the present disclosure, a resource can be seen itself as a data that is available to another data. For example, considering a multimedia content that comprises one text, three still images, and two videos clips, then each text, still image and video clip is a resource of the multimedia content. This multimedia content thus comprises six resources.

Let's consider now a video-on-demand service, and a customer who wants to access a specific movie thanks to this service. This movie may be separated in several video chapters (or video chunks) and some advertising spots (or advertisement chunks) may be inserted in the movie, at different position. Each video chapter comprised in the movie and each advertising spot associated to the movie is then considered as a resource of a same content: the movie including ads. Throughout the document it is assumed that no difference is made between a resource comprised in a content or a resource associated to a content, and both categories are referred to as resources of the content, or resources comprised in the content.

Both content and resources in the examples above are considered as data in the sense of the disclosure, as well as information representing their location on or within a server, such as IP addresses, hostnames, directory names or associated keys in a lookup table for example.

In a classical client-server system, when a client wants to access a data, it sends an initial request to a known server (identified by an IP address, or by a hostname for example), asking to get this data. The locations and names of the resources comprised in that data are then sent back in response to the client. The location of a resource specifies on which server this resource is hosted (by the means of an IP address or a hostname for example), and where it can be found on this server (by the mean of a directory name for example). Thanks to this information, the client is then able to request these resources from the servers on which they reside. It should be noted here that all resources are not necessary hosted in a same server, or in the server that receives the initial request. For example, advertising spots inserted in a video stream may be hosted in several dedicated ad servers, whereas the requested video is hosted in another server different than the one that received the initial demand. Aside from the initial request, the operation of recovering all the resources of data is usually transparent for the user: the client, by the means of a browser for example, is able to automatically build and send appropriate requests to appropriate servers, thanks to the information representing a location of each resource provided in response to the initial request. The whole data can thus be delivered to the user.

However, as already described in background art, anyone can easily capture and browse the traffic running on a client or on a part of a computer network by using simple and affordable tools. In particular, web debugging tools, such as Fiddler® or Firebug® Extension for Mozilla FireFox® browser for example, are widely used. When running on client side, they allow capturing and inspecting all the HTTP and HTTPS traffic that passes between the computer on which they reside (the client) and the Internet. Moreover, these tools usually offer the possibility to replay or manually build and send requests, or to manipulate any HTTP(s) request or response, thus giving even more opportunities to analyse how a system behaves on server side.

Therefore, by observing, on client side, the traffic being passed from servers to client and from client back to servers, and in particular the traffic following an initial request from a client to access a data, it may be possible for a third-party to learn a lot about the system architecture implemented on the server side.

For example, by analysing information representing the location of the resources of data - such as IP addresses, domain names or directory names included in request and responses exchanged - an observer could identify how the functionalities are distributed among several servers, which server is in charge of what, if access to external website is done and so on. This could be used to identify vulnerabilities of the system, or to alter client behaviour by the means of third party software for example (Ad blocking extensions for web browsers, such as Adblock® and Adblock Plus®, are examples of third party software that alter client behaviour, by preventing page elements, such as advertisements, from being downloaded and displayed).

The disclosed technique proposes features, which make it harder for an observer who analyses the traffic being passed from servers to client and from clients back to servers, to retro-engineer a system.

5.2 Data access method

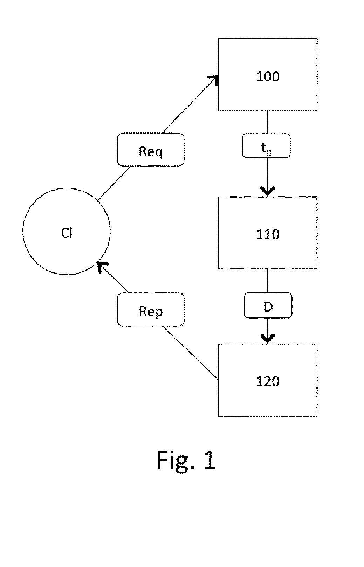

A first aspect of the disclosure relates to a method for accessing data before its transmission to a client, and is described in relation with figures 1 to 4.

The principle is to regularly change the location information that permits to access a resource of the data, in the response provided to a client following an initial request send to a server to access the content. In other words, whereas the real location of a resource of the content may stay the same - the resource may still be hosted on the same server, in the same place within this server - the information representing the location of this resource, also referred to as first location (which can be seen as an obfuscated location), is changing depending on when the client sends its request to access the data. A server that receives a request including this first location - the request being sent by a client in order to obtain a data - is able to access said data thanks to an appropriate mapping between this first location and this data.

To achieve this goal, according to the disclosure, the mapping between the first location and the data is associated with information representing a validity period for this mapping. This validity period specifies a time period during which the mapping is valid, i.e. it permits access to said data from the first location. This time period is supposed to be here a continuous time period, thus having a start date and an expiry date (but it should be noted that more than one instance of a same mapping could exist, each one being associated with a different validity period).

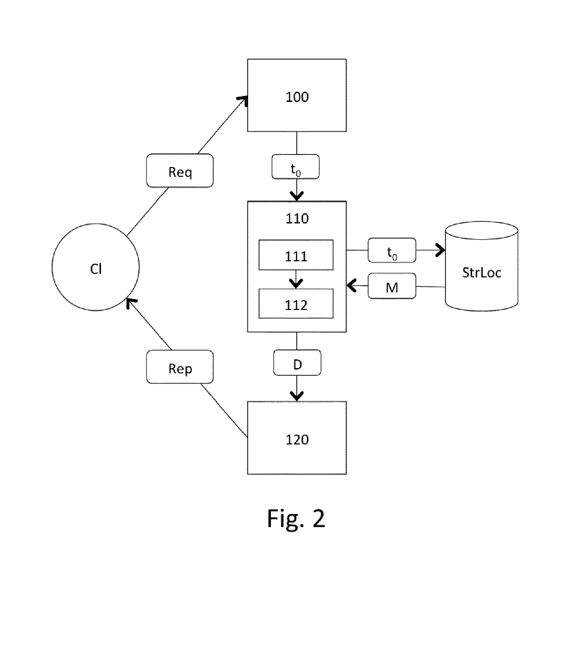

According to an embodiment of the disclosure described in **figure 1** and a variant described in **figure 2,** a client (Cl) sends a request (req) to a server, for accessing a specific data (for example a video content) thanks to a first location included in said request. The server receives this request (req) at a given time ($t_0$), during a receiving step (100).

The server then uses one mapping (110) (for example a mapping function) to retrieve data from the first location. The mapping is determined in function of the given time ($t_0$) and in function of the information representing a validity period for the mapping. According to the disclosure, the term "mapping" designates the action of obtaining a correspondence of hidden data with clear data. It also designates the result of this action.

According to one embodiment of the disclosure, the mapping to use is the result of a computation performed on the fly, for example the result of a pseudorandom permutation of a set of available locations. Applying a pseudorandom permutation makes it possible to translate a first location of the data - which can be seen as an obfuscated or hidden location of the data previously provided to the client, since this first location changes periodically - to a second, clear, location of the data, thus allowing the server to be able to access and retrieve said data. Moreover, by using a pseudorandom permutation, which is reversible, it is possible to retroactively retrieve which obfuscated location was associated to the real location of a data at a given time. Thus, for debugging or troubleshooting purpose, it remains possible for a programmer knowing the appropriate key to decipher URLs or messages to infer what their clear destination was.

According to a variant described in relation with figure 2, the mapping to use is retrieved from a data structure, called location data structure (StrLoc), in function of the given time ($t_0$) and in function of the information representing a validity period for the mapping. The location data structure (StrLoc) can take the form of an XML file or text file. The structure may also be stored in a database.

The location data structure (StrLoc) contains a collection of mappings, each associated with a validity period, each mapping linking a set of location to a set of data. Determining a mapping to use (110) comprises an identifying step (111) in which the location data structure (StrLoc) is browsed to identify valid mappings at given time ($t_0$) (i.e. mappings for which the associated validity period includes given time ($t_0$)). It should be noted here that in another embodiment, this identifying step could consist in browsing the location data structure (StrLoc) to identify valid mappings at a server time other than given time ($t_0$), for example: the server time when the browsing of the structure starts; or a server time taking into account a query execution time or other parameters. For the rest of this document, and for clarity purpose, this identifying step (111) is considered to be done in view of the given time ($t_0$). The identifying step (111) thus delivers a set of valid mappings involving the first location at given time ($t_0$).

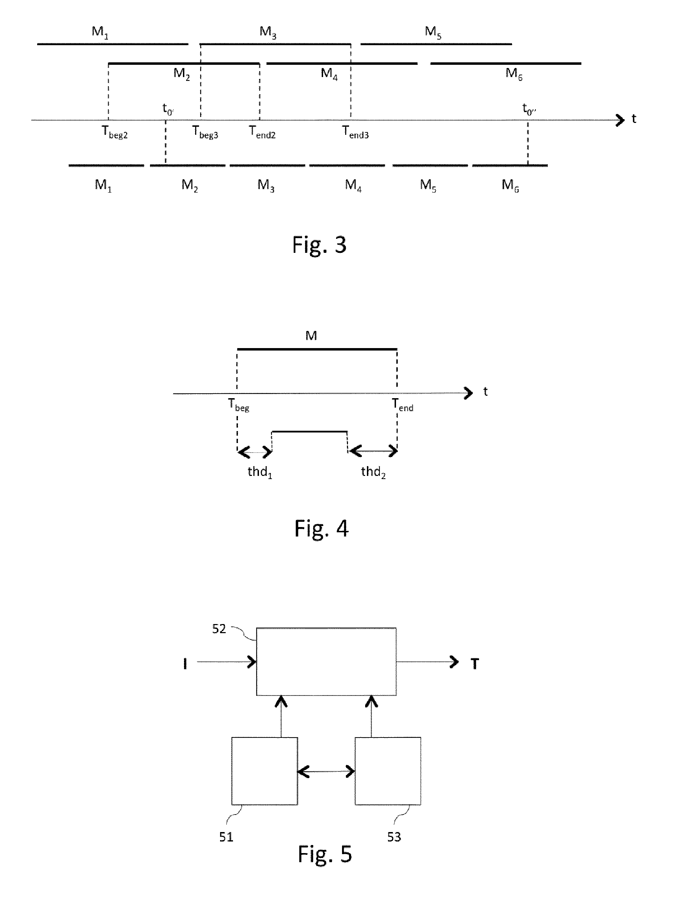

Determining a mapping to use (110) also comprises a selecting step (112) in which one valid mapping is selected among the set of valid mappings at given time ($t_0$). Examples of selecting techniques are given later in this document, in relation with figure 3.

Once selected, the mapping is used to access data from the first location, and the server finally performs a transmitting step (120): data is incorporated in a response (rep), which is sent back to the client for further use.

This technique allows a server to retrieve a specific data from an obfuscated location of this data, thanks to the use of an appropriate mapping. Indeed, successive requests transmitted by a client to access a same general content, for instance a multimedia content, may lead to the reception of responses that include different location information to access a same data associated to the content, thus making it more complicated for a third-party to retro-engineer the system implemented on server side.

Examples of information representing a location of a data on which the disclosure may be applied are IP addresses, subdomain names, or directory names. Indeed, it is possible to frequently and programmatically update subdomain names in a Domain Name Server (DNS). New subdomain names can be determined by a cipher function. Similarly, IP addresses can be rotated and assigned to the system in a non-predictable way. Directory names representing a location of a resource on a server can be associated to frequently updated factice names in a look-up table stored on the server. These operations should be reversible (by using pseudorandom permutation to rotate IP addresses for example), so that debugging and troubleshooting remains possible, even on the production system.

An implementation of one embodiment of the disclosure is described in relation with **figure 3**.

Above the time axis shown on the figure, the validity periods associated to several different mappings allowing access to same data, called location data mappings $M_1$ to $M_6$, are presented. Each validity period specifies the time period during which the associated mapping permits access to the data. During this time period, associated mapping is said to be valid. For example, mapping $M_2$ is valid between time $T_{beg2}$ and $T_{end2}$ and mapping $M_3$ is valid between time $T_{beg3}$ and $T_{end3}$. Only six mappings are presented in the example of figure 3, for clarity purpose, but it should be understood that it is not a limitation of the disclosure. It should also be understood that at any time, at least one mapping should be available to access data D.

Below the time axis, is presented an example of the mapping that could be used to access data D, depending on the time $t_0$ at which an initial request to access this data is received.

At a given time, only a valid mapping can be used to access data D. For example, still referring to figure 3, for an initial request received at time $t_{0'}$, mapping $M_2$ is used to access data D. If a request for accessing the same data is received by the server at time $t_{0''}$, the mapping used to access the same data D is now $M_6$. The retro engineering of the system is thus complicated, since the characteristics of the system that were potentially inferred from the constancy of location information embedded in traffic passed from servers to client and from client back to servers are no longer readily accessible, thanks to the fluctuation now introduced in the location information (the first location that changes periodically) and the use of an appropriate mapping on server side to obtain the expected data.

As presented on figure 3, more than one mapping allowing access to a same data may be valid at the same time. For example, on the example illustrated by figure 3, both mapping $M_2$ and $M_3$ are valid between times $T_{beg3}$ and $T_{end2}$. When more than one mapping allowing access to a same data is valid at the same time, a selection may be done to keep the appropriate one to use. According to one embodiment of the disclosure, this selection may be done thanks to the location information embedded in the request sent by the client to obtain data: this first location may comprise a value and a piece of information representative of the mapping to be used to access the data using said value. Let's consider for example a set of 512 available IP addresses, which can be thus represented with 9 bits. This set of 512 IP addresses is divided in two disjoint subsets of 256 IP addresses. One bit among the nine bits may be used to distinguish the subset (the first bit for example), the eight others being used to represent one of the 256 possible IP addresses. Each server of a given system may then be associated with one IP address of the first subset, and one IP address of the second subset, thus defining two mappings that may be valid at the same time. Other couples of mappings may be defined by using different permutation of the 256 IP addresses of each subset. According to the present embodiment of the disclosure, the location information embedded in the request sent by the client to obtain data may indeed be represented with 9 bits, the first bit thus being used to identify the subset to use, in association with a temporary secret shared by all the servers to identify a particular mapping within this subset (such as a key depending on the current time, and used to perform a pseudorandom permutation of the IP addresses of the subset). The eight remaining bits would then be used to retrieve the destination server of the request, in other words a second, clear location of the data to obtain. It should to be understood that this embodiment is not to be limited to the example discussed above. For example, a part of a hostname may be used in a similar manner to identify a mapping to use to access requested data.

Another embodiment of the disclosure is now presented in **figure 4**.

Above the time axis shown on the figure, the validity period of a mapping M allowing access to data D is shown. This mapping M is valid between time $T_{beg}$ and $T_{end}$.

According to a complementary feature of this embodiment, a period of use is defined and associated to the mapping, in addition to the validity period. This period of use specifies a time period, during which the mapping can actually be used to access data, following a request of the client to obtain said data. Still referring to figure 4, this period of use associated to mapping M is shown below the time axis.

Period of use is included in the validity period (only a valid mapping can be used to access data from a first location included in the request sent by a client to obtain said data) and can be defined in the following way: a mapping may be used to access data only if time $t_0$ is comprised between time $T_{beg}$ + $thd_1$ and $T_{end}$ - $thd_2$, where $thd_1$ is a propagation threshold, $thd_2$ is a processing threshold and $t_0$ the time at which an initial request to access data is received (by the server). In other words, a mapping which just becomes valid or which expires soon may not be used to access data D.

As described previously, a lot of systems are now distributed systems potentially involving more than one server. With distributed systems comes the issue of synchronization: any modification done on one server should be propagated to the other servers, especially if this information has an impact on the system architecture. In the present embodiment, the propagation threshold ($thd_1$) is used to ensure that all the servers potentially involved in a system have had enough time to synchronize with each other and have all taken into account that a new mapping to access data D is now available when this information is transmitted to the client. Without this propagation threshold, a location data associated to a resource could happen to be transmitted to a client at the very beginning of its validity period, and used immediately after by this client in an attempt to recover this resource. Because all servers did not have enough time to synchronize, there would be thus a risk that this attempt fails.

The other threshold, referred to as a processing threshold ($thd_2$), is used to ensure that a mapping to access data D will stay valid long enough to give a client enough time to access said data (even if the data rate for client-server exchange is low, or if resource size is important). Without this processing threshold, a location data associated to a resource could happen to be transmitted to a client at the very end of its validity period. There would be thus a risk that this location data expires before the client uses it, or while accessing the resource.

It should be noted that these two thresholds - the propagation threshold ($thd_1$) and the processing threshold ($thd_2$) - are mutually independent, and that in other embodiments, only one of them can be used.

### 5.3 Related server

Referring to **figure 5**, it is presented an embodiment of a server for accessing data according to the disclosure. A server for accessing data may be an applications server implementing one or more web services and/or a single material server in a communication network, which may interact with other communications network servers.

Such a server has a memory 51 comprising a buffer memory, a processing unit 52, equipped for example with a microprocessor and driven by the computer program 53 implementing at least certain steps of the data access method according to the disclosure.

At initialization, the code instructions of the computer program 53 are for example loaded into a RAM and then executed by a processor of the processing unit 52. The processing unit 52 inputs at least one piece of information I, such as the time ($t_0$) at which a request for accessing a data is received. The microprocessor of the processing unit 52 implements some of the steps of the method described here above, according to the instructions of the computer program 53, to deliver a piece of processed information T, such as the requested data. To this end, the server comprises, in addition to the buffer memory 51, means for receiving a request sent by a client to access a data (e.g. one or more network interfaces); and means for transmitting a response containing requested data back to the client (e.g. one or more network interfaces), said data being obtained by a mapping of the first location to a data, in function of said given time ($t_0$) and in function of a piece of information representing a validity period for said mapping.

According to other embodiments of the disclosure, the server comprises means for determining a mapping to use, within a data structure, called location data structure (e.g. its own database, or one or more interfaces to connect to a database server).

These means are for example driven by the microprocessor of the processing unit 52.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

5.4 Method for registering a mapping allowing access to data in a data structure

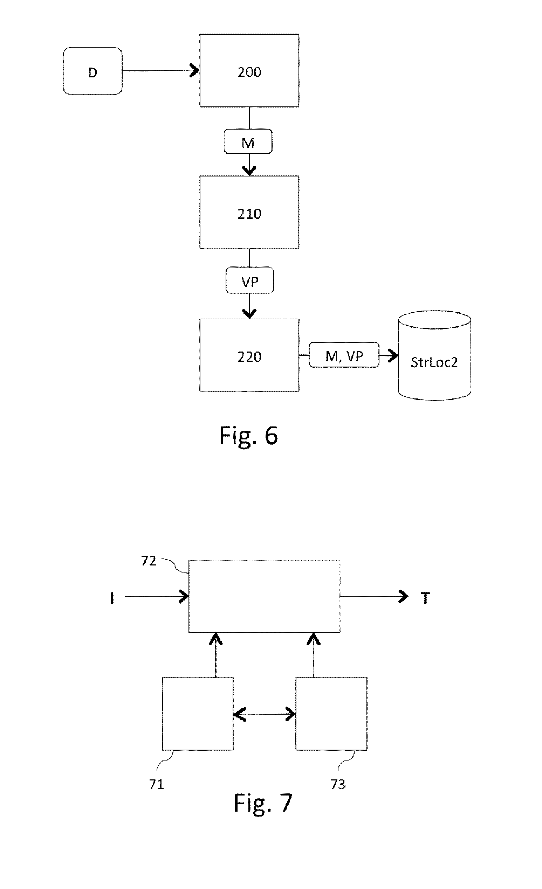

In another aspect, the disclosure pertains to a method for registering, in a data structure called location data structure (StrLoc2), a mapping allowing to access data, and an associated validity period. The validity period specifies a time period during which the mapping permits access to the data. This time period is supposed to be here a continuous time period, thus it can be characterised by a start date, an expiry date and/or a duration. During this time period, the mapping is said to be valid. The location data structure (StrLoc2) can take the form of an XML file or text file. The structure may also be stored in a database. The location data structure (StrLoc2) is thus a place where location information is associated to data (this is the mapping), said mapping being itself associated to a validity period. According to one embodiment, described in **figure 6**, the registering method comprises, for a given data (D):

- a step for determining (200) a mapping (M) allowing access to data (D) thanks to a location information;
- a step for computing (210) a validity period (VP) associated with the mapping (M);
- a step for registering (220) the mapping (M) and its associated validity period (VP) in a location data structure (StrLoc2);

The step for determining (200) a mapping (M) allowing access to data (D) may take different forms depending on the type of data considered. In one embodiment, mapping using brand new location information may be generated. This can be done for example by ciphering a clear information representing a location of a data - such as the name of the directory in which this data is located on a server - or by randomly creating from scratch this information, for example by creating a new subdomain name that will then be associated to the server that hosts this data in a Domain Name Server (DNS). In another embodiment of the disclosure, the mapping may be the result of a simple reallocation of existing location information available for representing a location of a data. For example, available existing IP addresses may be periodically rotated and reassigned to the servers where the data reside.

According to one embodiment of the disclosure, registering a mapping ($M_{new}$) allowing access to data (D) in the location data structure (StrLoc2) is applied whenever a valid mapping ($M_{old}$) allowing access to data (D) expires. The validity period of the mapping ($M_{new}$) is computed so that its start date coincides with the expiry date of the validity period of the previously mapping ($M_{old}$). In that way, the data (D) is at any time associated to a valid mapping in the location data structure (StrLoc2). In an alternative implementation, a plurality of mappings allowing access to data (D) may be determined at the same time, with some associated validity periods computed in order they covers a given time period, thus specifying a time period during which the data (D) is always associated with at least one valid mapping. This operation is repeated before the end of said time period, so that the data (D) is at any time associated to a valid mapping in the location data structure (StrLoc2).

According to a specific embodiment, a step of deleting a mapping from the location data structure (StrLoc2) may be implemented, when the validity period expiry date of a mapping has passed (the mapping is then said to be expired). This prevents the location data structure (StrLoc2) size to increase indefinitely, which could lead to storage and performance issues. A retention period may be observed before deleting an expired mapping, so that a history of previous mappings allowing to access data (D) is kept - even if limited in time - in the location data structure (StrLoc2), for debugging or troubleshooting purposes for example.

While referring to a mapping as the association between location information and data through the present document, it must be understood here that a mapping is more generally an association between a set of location information and a set of data. Thus, in another embodiment of the disclosure, a same validity period (same start date, same expiry date) may be associated with several location information mapped to several data. In that way, the steps of determining (200) a mapping and computing (210) an associated validity period allow to handle the access to several data through a single mapping.

Depending on their type, it may happen that the information that are available to represent the location of data are only available in limited quantity. For example, available IP addresses (especially IPv4 addresses) may be limited. In that case a pseudorandom permutation may be used to periodically redistribute IP addresses among the different servers that host the data, thus delivering a mapping between the available IP addresses and the data. This mapping is stored in the location data structure (StrLoc2), and associated with a given validity period, thus common to all association between IP addresses and resources. At the expiry date of this validity period, a new pseudorandom permutation is performed, thus delivering a new mapping between the IP addresses and the resources, said mapping which in turn is stored in the location data structure (StrLoc2) in association with a new validity period, and so on. A way to easily compute a validity period to associate to such mappings is to always use a constant validity period duration: once performed, the mapping resulting of a pseudorandom permutation is valid for this constant duration. Rotating the IP addresses in that way has the advantage to limit the validity of information that an attacker can infer. The pseudo random permutation in use is defined by a key, which is agreed by all the servers of the system implemented to deliver the content. The key can be explicitly updated or provided by an oracle to all servers, or it can be implicit (e.g., it depends on a shared secret and on the time, and servers are loosely synchronised). Modern infrastructures (especially cloud infrastructure) allow programmatic access to all configurations, including network configuration, which makes it possible to programmatically update a service (change the IP, update DNS record, change keys in a lookup table) whenever the permutation in use is updated. By using a pseudorandom permutation, which is reversible, it is possible to retroactively retrieve which IP address was associated to which server at a given time. Thus, for debugging or troubleshooting purpose, it remains possible for a programmer knowing the appropriate key to decipher URLs or messages to infer what their clear destination server was.

Another embodiment of the disclosure is presented hereafter. In this embodiment, the set of available IP addresses is separated into two disjoint subsets. Each server is associated with one IP address of the first subset, and one IP address of the second subset. At regular time interval - the time interval corresponding to a constant validity period duration (e.g. five minutes, thirty minutes, one hour) - the IP addresses of the first subset are re-permuted and re-assigned to servers. The same operation is done for the IP address of the second subset, which are re-permuted and re-assigned to servers according to the same regular time interval, but this operation is deliberately not synchronised with re-permutation and re-assignment of IP addresses of the first subset. For example, if the validity period of any given mapping is fixed to the constant value of ten minutes, then the IP addresses of the second subset are always re-permuted and re-assigned to servers five minutes after the IP addresses of the first subset were re-permuted and re-assigned to servers. In that way, the conditions for implementing the mechanisms for accessing data as described in the first aspect of the disclosure are met at any time: a same server (the real location of a data) is always associated to at least one valid IP address (a piece of information representing the location of the data) through a mapping which has not just become valid or is not going to expire soon. In that way, server synchronization issues and request time processing issues described in the first aspect of the disclosure, relating to a method for accessing a data, are addressed at any time. It should be noted that the previous described technique is not limited to IP addresses, but can be applied to other type of information representing a location of a data. Moreover, more than two disjoint subsets can be used without departing from the scope of the present disclosure.

Another possible technique to generate information representing the location of a data is to cypher the real location of the data, for example a part of the host name of the server on which it resides, or the directory name where it can be found on that server, or any other information that can be used to locate the data (such as a key associated to the data in a lookup table). By periodically changing the encryption key, different information representing the location of a data can be obtained, and used in a mapping stored in the location data structure (StrLoc2) with an associated validity period.

Those skilled in the art will observe that the embodiments depicted can be combined and modified in various forms, to create other embodiments of the present disclosure.

It should also be noted that the location data structure (StrLoc2) described in the second aspect of the disclosure, related to a method for registering a mapping allowing access to data, is not necessary the same than the location data structure (StrLoc) described in one embodiment of the first aspect of the disclosure, related to a method for accessing a data: other processing may be performed to move from one to the other. However, in a simple embodiment, these two data structures may be one and unique data structure.

5.5 Related server

Referring to **figure 7**, it is presented an embodiment of a registering server. A registering server may be an applications server implementing one or more web services and/or a single material server in a communication network, which may interact with other communications network servers.

Such a server has a memory 71 consisting of a buffer memory, a processing unit 72, equipped for example with a microprocessor and driven by the computer program 73 implementing at least certain steps of the content transmitting method according to the disclosure.

At initialization, the code instructions of the computer program 73 are for example loaded into a RAM and then executed by a processor of the processing unit 72. The processing unit 72 inputs at least one piece of information I, such as a current mapping allowing access to data and its associated validity period. The microprocessor of the processing unit 72 implements some of the steps of the method described here above, according to the instructions of the computer program 73, to deliver a piece of processed information T, such as a registered new mapping allowing access to data, and its associated validity period. To this end, the server comprises, in addition to the buffer memory 71, means for determining a new mapping allowing access to data; means for computing a validity period associated with the new mapping (for example in function of the validity period of the piece of information I); and means for registering the new mapping and its associated validity period in a location data structure (StrLoc2) (e.g. its own database, or one or more interfaces to connect to a database server).

These means are for example driven by the microprocessor of the processing unit 72.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

**Claims**

1.  A method for accessing a data, said method being implemented in a server accessible by a client through a communication network, said method comprising:

    - receiving (100), at a given time ($t_0$), from said client, a request (req) to access said data using a first location;
    - transmitting (120) to said client a response (rep) comprising said data;

    wherein said data is obtained by a mapping (110) of the first location to a data, said mapping being determined in function of said given time ($t_0$) and in function of an information representing a validity period for said mapping, the validity period specifying a time period during which the mapping for accessing to the data is valid.

2.  The method for accessing a data according to claim 1, wherein determining said mapping (110) of the first location to a data comprises looking up in a data structure.

3.  The method according to claim 2, wherein determining said mapping (110) of the first location to a data comprises:

    - identifying (111), within said location data structure, a set of valid mappings, a valid mapping corresponding to mapping for which a validity period is valid considering said given time ($t_0$);
    - selecting (112) at least one mapping among said set of valid mappings.

4.  The method for accessing a data according to claim 1, wherein said mapping (110) of the first location to a data comprises applying a pseudorandom permutation to translate said first location into a second location of the data.

5.  The method for accessing a data according to any of claims 1 to 4, wherein said first location comprises a value and an information representative of the mapping to be used to access data using said value.

6. The method according to any of claims 1 to 5, wherein mapping (110) of said first location to a data is used when:

$$t_0 > T_{beg} + thd_1$$

where :

t_0 is said given time;
T_{beg} is representative of the beginning of validity period for said mapping.
thd_1 is representative of a propagation threshold.

7. The method according to any of claims 1 to 6, wherein mapping (110) of said first location to a data is used when:

$$t_0 < T_{end} - thd_2$$

where :

t_0 is said given time;
T_{end} is representative of the end of validity period for said mapping;
thd_2 is representative of a processing threshold.

8. The method according to any of claims 1 to 7, wherein said first location belongs to the group comprising:

- IP addresses;
- Subdomain names;
- Directory names;
- Keys in key-value store.

9. Computer program product downloadable from a communications network and/or stored in a computer-readable carrier and/or executable by a microprocessor, **characterized in that** it comprises program code instructions for the execution of the method for accessing a data according to at least one of the claims 1 to 8, when it is executed on a computer.

10. A server for accessing a data, said server being accessible by a client through a communication network, said server comprising:

- means for receiving, at a given time (t_0), from said client, a request (req) to access said data using a first location;

- means for transmitting to said client a response (rep) comprising said data.

wherein said data is obtained by a mapping of the first location to a data, said mapping being determined in function of said given time (t_0) and in function of an information representing a validity period for said mapping, the validity period specifying a time period during which the mapping for accessing to the data is valid.

11. The server according to claim 10, said server further comprising means for looking up in a data structure to determine a mapping to use to access said data from said first location.

12. The server according to claim 11, said server comprising:

- means for identifying, within said data structure, a set of valid mappings, a valid mapping corresponding to a mapping for which a validity period is valid considering said given time (to);
- means for selecting at least one mapping among said set of valid mappings.

13. The server according to any of claims 10 to 12, said server comprising means for applying a pseudorandom permutation to translate said first location into a second location of the data.

14. The server according to any of claims 10 to 13, said server comprising means for using a mapping of said first location to said data when:

$$t_0 > T_{beg} + thd_1$$

where :

t_0 is said given time;
T_{beg} is representative of the beginning of validity period for said mapping.
thd_1 is representative of a propagation threshold.

15. The server according to any of claims 10 to 14, said server comprising means for using a mapping of said first location to said data when:

$$t_0 < T_{end} - thd_2$$

where :

t_0 is said given time;

23 **EP 3 016 346 A1** 24

$T_{end}$ is representative of the end of validity period for said mapping;
$thd_2$ is representative of a processing threshold.

**13**

Fig. 1

Fig. 2

$M_1$ $M_3$ $M_5$

$M_2$ $M_4$ $M_6$

$t_{0'}$ $t_{0''}$ t

$T_{beg2}$ $T_{beg3}$ $T_{end2}$ $T_{end3}$

$M_1$ $M_2$ $M_3$ $M_4$ $M_5$ $M_6$

## Fig. 3

M

t

$T_{beg}$ $T_{end}$

$thd_1$ $thd_2$

## Fig. 4

52

I → T

51 53

## Fig. 5

Fig. 6

Fig. 7

Europäisches
Patentamt

European
Patent Office

Office européen
des brevets

# EUROPEAN SEARCH REPORT

Application Number

EP 14 30 6732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/097564 A1 (TEWARI ANOOP KAILASNATH [US] ET AL) 22 May 2003 (2003-05-22) | 1-3, 5-12,14, 15 | INV. H04L29/06 |
| Y | * paragraph [0012] - paragraph [0016] * <br> * paragraph [0042] - paragraph [0043] * <br> * paragraph [0059] * <br> * paragraph [0603] - paragraph [0604] * <br> * paragraph [0610] - paragraph [0613] * <br> * paragraph [0617] - paragraph [0618] * <br> * paragraph [0623] * <br> * paragraph [0285] * <br> ----- | 4,13 | |
| Y | US 2011/103394 A1 (VOGT CHRISTIAN [US] ET AL) 5 May 2011 (2011-05-05) | 4,13 | |
| A | * paragraph [0024] * <br> * paragraph [0032] * <br> * paragraph [0038] * <br> * paragraph [0063] * <br> ----- | 1-3, 5-12,14, 15 | |
| A | EP 2 388 725 A1 (ALADDIN EUROP GMBH [DE]) 23 November 2011 (2011-11-23) <br> * paragraph [0006] * <br> * paragraph [0013] - paragraph [0017] * <br> * paragraph [0027] - paragraph [0029] * <br> ----- | 1-15 | |

TECHNICAL FIELDS SEARCHED (IPC)

H04L
G06F

The present search report has been drawn up for all claims

| Place of search | Date of completion of the search | Examiner |
|---|---|---|
| The Hague | 19 March 2015 | Lázaro, Marisa |

EPO FORM 1503 03.82 (P04C01)

## ANNEX TO THE EUROPEAN SEARCH REPORT
## ON EUROPEAN PATENT APPLICATION NO.

EP 14 30 6732

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2015

| Patent document cited in search report | | Publication date | Patent family member(s) | | Publication date |
|---|---|---|---|---|---|
| US 2003097564 | A1 | 22-05-2003 | AU 2003263062 A1<br>US 2003097564 A1<br>US 2009007241 A1<br>US 2010299722 A1<br>WO 2004023716 A2 | | 29-03-2004<br>22-05-2003<br>01-01-2009<br>25-11-2010<br>18-03-2004 |
| US 2011103394 | A1 | 05-05-2011 | EP 2497253 A1<br>TW 201201554 A<br>US 2011103394 A1<br>WO 2011055262 A1 | | 12-09-2012<br>01-01-2012<br>05-05-2011<br>12-05-2011 |
| EP 2388725 | A1 | 23-11-2011 | EP 2388725 A1<br>JP 2013526742 A<br>US 2013179984 A1<br>WO 2011144379 A1 | | 23-11-2011<br>24-06-2013<br>11-07-2013<br>24-11-2011 |

EPO FORM P0459

For more details about this annex : see Official Journal of the European Patent Office, No. 12/82